(19) **Europäisches Patentamt**
**European Patent Office**
**Office européen des brevets**

(11) **EP 3 685 505 B1**

(12) **EUROPÄISCHE PATENTSCHRIFT**

(45) Veröffentlichungstag und Bekanntmachung des Hinweises auf die Patenterteilung:
**13.12.2023 Patentblatt 2023/50**

(21) Anmeldenummer: **18789770.7**

(22) Anmeldetag: **18.10.2018**

(51) Internationale Patentklassifikation (IPC):
*H02P 27/04* (2016.01)     *H02M 1/38* (2007.01)
*H02M 7/48* (2007.01)

(52) Gemeinsame Patentklassifikation (CPC):
**H02P 27/047; H02M 1/38; H02M 7/48; H02P 27/04;**
H02M 1/385

(86) Internationale Anmeldenummer:
**PCT/EP2018/078599**

(87) Internationale Veröffentlichungsnummer:
**WO 2019/077059 (25.04.2019 Gazette 2019/17)**

(54) **VERFAHREN ZUM BESTIMMEN DER FEHLSPANNUNG EINES STROMRICHTERS SOWIE DREHFELDMASCHINE MIT FEHLSPANNUNGSKOMPENSATION**

METHOD FOR DETERMINING THE ERROR VOLTAGE OF A CURRENT CONVERTER AND THREE-PHASE MACHINE HAVING ERROR VOLTAGE COMPENSATION

PROCÉDÉ PERMETTANT DE DÉTERMINER UN DÉFAUT DE TENSION D'UN CONVERTISSEUR DE COURANT AINSI QUE MACHINE À INDUCTION MUNIE D'UNE COMPENSATION DES DÉFAUTS DE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2017 DE 102017009707**
        **01.12.2017 DE 102017128602**

(43) Veröffentlichungstag der Anmeldung:
**29.07.2020 Patentblatt 2020/31**

(73) Patentinhaber: **Liebherr-Electronics and Drives GmbH**
**88131 Lindau (DE)**

(72) Erfinder:
• **SCHEU, Tobias**
**72582 Grabenstetten (DE)**
• **SCHULLERUS, Gernot**
**72768 Reutlingen (DE)**

(74) Vertreter: **Thoma, Michael**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
GB-A- 2 417 623      US-A1- 2010 007 299
US-B2- 8 084 986

• KHAMBADKONE A ET AL: "Vector controlled induction motor drive with a self-commissioning scheme", SIGNAL PROCESSING AND SYSTEM CONTROL, FACTORY AUTOMATION. PACIFIC GROVE, NOV. 27 - 30, 19; [PROCEEDINGS OF THE ANNUAL CONFERENCE OF THE INDUSTRIAL ELECTRONICS SOCIETY. (IECON)], NEW YORK, IEEE, US, Bd. CONF. 16, 27. November 1990 (1990-11-27), Seiten 927-932, XP010038096, DOI: 10.1109/IECON.1990.149263 ISBN: 978-0-87942-600-2

**Beschreibung**

Die vorliegende Erfindung betrifft ein Verfahren zum Bestimmen einer Fehlspannung eines Stromrichters, an den eine Last, insbesondere in Form einer Drehfeldmaschine wie Asynchronmaschine, angeschlossen ist, bestimmt und ggf. kompensiert wird, wobei eine Ausgangsspannung an dem Stromrichter stufen- oder schrittweise erhöht und der sich hierbei als Sprungantwort einstellende Strom gemessen wird. Die Erfindung betrifft weiterhin eine Drehfeldmaschine beispielsweise in Form einer Asynchronmaschine, mit einer Leistungselektronik umfassend einen Stromrichter sowie einer Kompensationseinrichtung zum Kompensieren der Fehlspannung des Stromrichters, sowie weiterhin ein Verfahren zum Betreiben und/oder Steuern einer solchen Drehfeldmaschine, bei dem die Fehlspannung des Stromrichters bestimmt und kompensiert wird.

Beim Betreiben einer Drehfeldmaschine wie beispielsweise einer Asynchronmaschine an einem Frequenzumrichter weicht der tatsächlich am Ausgang des Frequenzumrichters anliegende Spannungswert regelmäßig von dem vorgegebenen Sollwert ab. Die Ursachen für eine solche Abweichung der Ausgangsspannung können verschiedener Natur sein und insbesondere die Wechselsperrzeit zwischen dem oberen und unteren Schalter eines Brückenzweigs, die Schaltverzögerungen der Leistungsschalter, den Spannungsabfall an den Leistungsschaltern im eingeschalteten Zustand, den Spannungsabfall an den Freilaufdioden und das reale Ein- und Abschaltverhalten der Leistungsschalter umfassen.

Die genannte Wechselsperrzeit wird dabei vorgesehen, um einen Kurzschluss der einzelnen Brückenzweige der Endstufe zu vermeiden.

Die Schaltverzögerungen werden durch die in der Endstufe integrierten Leistungsschalter vorgegeben und sind vom Betrag des Ausgangsstroms des Frequenzumrichters abhängig, wobei diese Schaltverzögerungen in Einschaltverzögerungen und Abschaltverzögerungen aufgeteilt werden können. Bei sog. IGBTs, d.h. Insulated-Gate Bipolar Transistors spielt die Einschaltverzögerung keine große Rolle, da sie gering und wenig stromabhängig ist, während im Gegensatz hierzu die Abschaltverzögerung beträchtlich ist und stark vom Strom abhängt. Demnach beeinflusst die Abschaltverzögerung maßgeblich die Ausgangsspannung des Frequenzumrichters in Abhängigkeit des Betrags des Ausgangsstroms.

Der genannte Spannungsabfall an den Leistungsschaltern im eingeschalteten Zustand und der genannte Spannungsabfall an den Freilaufdioden ist jeweils vom Betrag des Ausgangsstroms abhängig.

Ferner verlaufen die genannten realen Schaltflanken der Ausgangsspannung nicht ideal. Mit einem idealen bzw. nicht-idealen Verlauf der Schaltflanken ist dabei gemeint, dass die Leistungsschalter nicht in unendlich kurzer Zeit vom abgeschalteten in den eingeschalteten und umgekehrt vom eingeschalteten in den abgeschalteten Zustand schalten können. Demnach verlaufen die Schaltflanken der Ausgangsspannung nicht unendlich steil, so dass die Ausgangsspannung ihren Wert innerhalb der Ein- und Abschaltverzögerungen während des Übergangs vom abgeschalteten in den eingeschalteten Zustand oder umgekehrt vom eingeschalteten in den abgeschalteten Zustand der Leistungsschalter ändert. Dabei hat die Ausgangsspannung innerhalb dieser Übergänge einen nicht-linearen Verlauf bezüglich der Zeitachse. Da bei den genannten IGBTs die Abschaltverzögerung deutlich größer ist als die Einschaltverzögerung, hat das Abschaltverhalten der IGBTs einen deutlich größeren Einfluss auf die Abweichung der Ausgangsspannung als das Einschaltverhalten.

Schließlich ist das Ein- und Abschaltverhalten der Leistungsschalter ebenfalls vom Betrag des Ausgangsstroms abhängig.

Diese verschiedenen Einflüsse auf die Fehlspannung eines Frequenzumrichters und deren Abhängigkeit von der Höhe des Ausgangsstroms macht die Identifikation der Parameter der Drehfeldmaschine und/oder der zu deren Betreiben verwendeten Leistungselektronik schwierig. Ähnliche Probleme ergeben sich nicht nur bei Frequenzumrichtern, sondern auch bei anderen Stromrichtern wie Gleichrichtern, Wechselrichtern oder anderen Umformern, wobei solche Stromrichter neben den schon genannten IGBTs auch andere elektronische Bauteile wie Dioden, Transistoren, Thyristoren, MOSFETs, IGCTs oder andere Halbleiterbauteile umfassen können, sowie nicht nur bei daran betriebenen Asynchronmaschinen, sondern auch anderen Drehfeldmaschinen wie Synchronmaschinen auftreten können.

Zur Parameteridentifikation kann dabei die Drehfeldmaschine mit einer Sollspannung $u_{d,Soll}$ angeregt werden, wobei die besagte Sollspannung $u_{d,Soll}$ mit mehreren Spannungssprüngen $\Delta U_{d,Soll}$ sprung- bzw. stufenweise erhöht wird und der jeweils als Sprungantwort resultierende Strom $i_{d,ist}$ gemessen wird. Dieses stufen- bzw. sprungweise Erhöhen der Sollspannung kann dabei so oft wiederholt werden, bis der Nennstrom $I_N$ der Drehfeldmaschine erreicht wird.

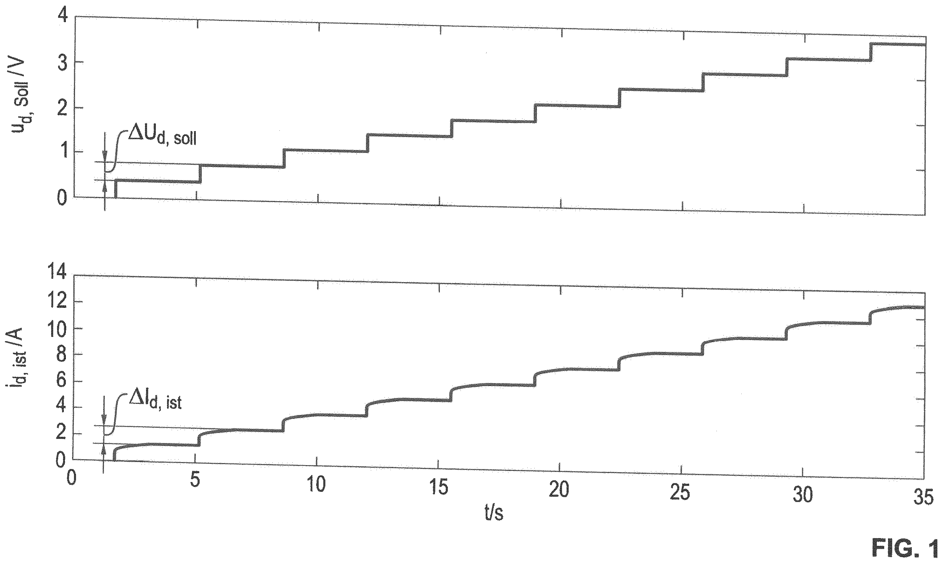

Der Verlauf der solchermaßen sprungweise erhöhten Sollspannung $u_{d,Soll}$ und die sich hierbei einstellende Sprungantwort in Form des gemessenen Stroms $i_{d,Ist}$ ist beispielsweise aus der Fig. 1 ersichtlich. Dort ist jeweils die Sollspannung $u_{d,Soll}$ in Volt bzw. der Istrom $i_{d,Ist}$ in Ampere über der Zeit aufgetragen, wobei aus der Darstellung der Fig. 1 auch ein Spannungssprung $\Delta U_{d,Soll}$ und ein dabei als Antwort auftretender Ist-Stromsprung $\Delta I_{d,Ist}$ ersichtlich sind.

Anhand der Soll- bzw. Messdaten $u_{d,Soll}$ und $i_{d,Ist}$ können verschiedene Parameter wie beispielsweise der Statorwiderstand der Drehfeldmaschine, der Rotorwiderstand, eine Hauptinduktivität oder eine Streuinduktivität in einem Ersatzschaltbild in Abhängigkeit des Stroms identifiziert werden.

Dabei führt jedoch die Abweichung der tatsächlichen Ausgangsspannung $u_{d,Ist}$ von dem vorgegebenen Sollwert $u_{d,Soll}$ zu starken Abweichungen der identifizierten Parameter. Um dies abzumildern oder bestenfalls ganz zu eliminieren, ist die Fehlspannung, d.h. die Abweichung der am Frequenzumrichterausgang tatsächlich anliegenden Ausgangsspannung von dem vorgegebenen Sollwert, zu bestimmen und zu kompensieren.

Für die Kompensation der Fehlspannung eines Frequenzumrichters existieren bereits verschiedene Ansätze. Beispielsweise kann zur Kompensation der Wechselsperrzeit die Ausgangsspannung des Frequenzumrichters um die eingestellte Wechselsperrzeit in Abhängigkeit der Phasenstrompolarität angepasst werden. Hierbei wird die Ausgangsspannung um einen konstanten Wert korrigiert, wobei die stromabhängigen Ursachen für die Fehlspannung wie beispielsweise Schaltverzögerungen der Leistungsschalter, Spannungsabfall an den Leistungsschaltern im eingeschalteten Zustand, Spannungsabfall an den Freilaufdioden und das reale Schaltverhalten der Leistungsschalter nicht berücksichtigt werden. Betrachtet man beispielsweise einen Brückenzweig, hängt die Fehlspannung von der Phasenstrompolarität ab. Für positive Phasenströme erhält man deshalb am Ausgang eine geringere Spannung als durch den Sollwert vorgegeben, während man für negative Phasenströme am Ausgang eine höhere Spannung als durch den Sollwert vorgegeben erhält. Der Betrag der Differenz zwischen realer Ausgangsspannung und Sollwert ist für positiven und negativen Phasenstrom mit jeweils gleich großem Betrag. Konkret kann dabei die Korrektur der Ausgangsspannung in Abhängigkeit der Phasenstrompolarität auf zwei Arten erfolgen. Zum einen kann die Pulsbreite der Pulsweitenmodulations-Signale der einzelnen Brückenzweige um die Wechselsperrzeit in Abhängigkeit der Phasenstrompolarität korrigiert werden. Zum anderen können die Sollwerte der Ausgangsspannung um eine konstante Fehlspannung in Abhängigkeit der Phasenstrompolarität korrigiert werden.

Erfolgt die Korrektur der Ausgangsspannung über eine Korrektur der Sollwerte der Ausgangsspannung, kann die Fehlspannung $u_F$ aus der Pulsweitenmodulation-Taktfrequenz $f_{PWM}$, der Wechselsperrzeit $T_d$ und der Zwischenkreisspannung $U_Z$ anhand der Beziehung

$$u_F = f_{PWM} T_d U_Z$$

bestimmt werden.

Um die durch Schaltverzögerungen und das reale Schaltverhalten der Leistungsschalter bedingte Fehlspannung zu kompensieren, werden die Ein- und Abschaltflanken der Leistungsschalter häufig linearisiert, wobei die Ein- und Abschaltzeit der Leistungsschalter aus dem Datenblatt der Endstufe entnommen werden kann. Auch der Spannungsabfall an der Leistungsschaltern im eingeschalteten Zustand und der Spannungsabfall an den Freilaufdioden können aus dem Datenblatt der Endstufe entnommen werden. Da die Ein- und Abschaltzeiten, der Spannungsabfall an den Leistungsschaltern im eingeschalteten Zustand und der Spannungsabfall an den Freilaufdioden stromabhängig sind und im Datenblatt in der Regel nur ein Wert für den Nennstrom der Endstufe angegeben ist, leidet eine solche Fehlspannungskompensation anhand der Datenblattangabe stark hinsichtlich ihrer Exaktheit.

Um die Genauigkeit der Fehlspannungskompensation zu verbessern, kann in einem bestimmten Strombereich der Verlauf der Fehlspannung in Abhängigkeit des Stroms näherungsweise berechnet oder geschätzt werden. Dabei wird häufig von einem linearen oder einem exponentiellen Zusammenhang zwischen der Fehlspannung und dem Strom ausgegangen. Um die stromabhängigen Einflüsse von Schaltverzögerungen, Spannungsabfall an den Leistungsschaltern im eingeschalteten Zustand, Spannungsabfall an den Freilaufdioden und vom realen Schaltverhalten exakter zu kompensieren, ist es sinnvoll, die verwendete Endstufe durch eine Kennlinie zu charakterisieren, die den Zusammenhang zwischen der Fehlspannung und dem Ausgangsstrom des Frequenzumrichters in der Form $u_F(i)$ beschreibt.

Die Bestimmung und Verwendung einer solchen Kennlinie $u_F(i)$ zur Kompensation der Fehlspannung eines Frequenzumrichters zeigen beispielsweise die Schriften US 8084986 B2, US 2011/0156632 A1 oder GB 2417623 A.

Ferner kann zur Identifikation der Fehlspannung einer Endstufe die Spannungs-Zeit-Fläche eines Spannungspulses der Ausgangsspannung oder der Gleichspannungswert der Ausgangsspannung oder der Gleichspannungswert für verschiedene Ausgangsströme messtechnisch ermittelt werden, wofür die Endstufe mit einer definierten ohmschen-indukiven Last belastet werden kann. Über einen Vergleich der gemessenen Spannungs-Zeit-Fläche mit der idealen Spannungs-Zeit-Fläche der Ausgangsspannung oder über einen Vergleich des gemessenen Gleichspannungswerts mit dem idealen Gleichspannungswert der Ausgangsspannung kann die Kennlinie der Fehlspannung in Abhängigkeit des Stroms uF(i) ermittelt werden. Dabei werden die ideale Spannungs-Zeit-Fläche und der ideale Gleichspannungswert von dem vorgegebenen Sollwert der Ausgangsspannung bestimmt. Die hierdurch ermittelbare Kennlinie $u_F(i)$ kann anschließend in der Software eines Frequenzumrichters implementiert werden, um eine Fehlspannungskompensation zur Laufzeit der Messung der Parameteridentifikation vorzunehmen. Nachteilig ist hierbei jedoch, dass eine zusätzliche Spannungsmessung zur Charakterisierung der Endstufe durchgeführt werden muss.

Die Schrift Khambadkone A et al.: "Vector controlled induction motor drive with a selfcommissioning scheme", in proceedings of the annual conference of the industrial electronic society, New York, IEEE, US, BD Conf 16, 27.11.1990, S. 927 - 932, XP010038096, ISBN: 978-0-87942-600-2 beschreibt eine Vektorsteuerung für einen Induktionsmotor, wobei zur Berücksichtigung der Fehlspannung verschiedene Systemparameter bestimmt werden. Dabei wird einerseits der Stator-Widerstand durch Erregung mit einem PWM-Stromsignal bestimmt und andererseits sich bei der Ansteuerung ergebende Zeitverzögerungen ermittelt, wobei Spannungspulse stufenweise so lange erhöht werden, bis der Spannungspuls etwa 30% der Soll-Spannung erreicht hat. Um die Feldschwächungscharakteristik bestimmen zu können, wird die Motordrehzahl erfasst.

Hiervon ausgehend liegt der vorliegenden Erfindung die Aufgabe zugrunde, ein verbessertes Verfahren zum Bestimmen der Fehlspannung eines Frequenzumrichters, ein verbessertes Verfahren zum Betreiben und/oder Steuern einer Drehfeldmaschine sowie eine verbesserte Drehfeldmaschine der eingangs genannten Art zu schaffen, die Nachteile des Standes der Technik vermeiden und Letzteren in vorteilhafter Weise weiterbilden. Insbesondere soll eine einfache, aber dennoch exakte Bestimmung und Kompensation der Fehlspannung eines Frequenzumrichters ermöglicht werden, die die Stromabhängigkeit der Ursachen für die Fehlspannung eines Frequenzumrichters ausreichend berücksichtigt.

Erfindungsgemäß wird die genannte Aufgabe durch ein Verfahren gemäß Anspruch 1, ein Verfahren gemäß Anspruch 10 sowie eine Drehfeldmaschine gemäß Anspruch 13 gelöst. Bevorzugte Ausgestaltungen der Erfindung sind Gegenstand der abhängigen Ansprüche.

Es wird also vorgeschlagen, zur Bestimmung der Fehlspannung von der jeweils vorgegebenen Sollspannung auszugehen und diese durch ein stromabhängiges Korrekturglied zu korrigieren, wobei das genannte stromabhängige Korrekturglied aus einem als Sprungantwort gemessenen Stromwert und einem Widerstand der Last bestimmt wird. Der Widerstand, insbesondere der Statorwiderstand der Drehfeldmaschine, wird dabei aus einem Soll-Spannungssprung und einem dabei auftretenden Ist-Stromsprung in einem ausreichend hohen Strombereich bestimmt, um den Fehlspannungseinfluss auf die gemessene Sprungantwort des Ist-Stroms zu reduzieren. Erfindungsgemäß ist vorgesehen, dass die Fehlspannung aus dem als Sprungantwort gemessenen Strom und einem Widerstand der Last bestimmt wird, wobei der genannte Widerstand aus einem Sollspannungssprung und einem dabei gemessenen Iststromsprung in einem relativ hohen Strombereich von mindestens 30% oder mindestens 50% des Nennstroms der Endstufe des Stromrichters bestimmt wird.

Einerseits vereinfacht sich die Widerstandsbestimmung, da der jeweils vorgegebene Sollwert des Spannungssprungs verwendet wird. Andererseits kann trotzdem eine durch die Nicht-Berücksichtigung der tatsächlichen Fehlspannung an sich implizierte Ungenauigkeit vermieden oder zumindest stark reduziert werden, wenn für die Bestimmung des Widerstands ein Sollspannungssprung und der als Sprungantwort gemessene Iststrom in einem relativ hohen Strombereich herangezogen wird, der ausreichend nahe am Nennstrom der Endstufe des Stromrichters liegt. Diesem Ansatz liegt die Überlegung zugrunde, dass in niedrigen, vom Nennstrom weit entfernten Strombereichen der tatsächliche Spannungssprung durch den Einfluss der Fehlspannung relativ stark verformt bzw. verfälscht wird, während bei hohen Strömen im Bereich des Nennstroms der Endstufe sich die Sprunghöhe des tatsächlichen Spannungssprungs $\Delta U_{d,Ist}$ genauer an den vorgegebenen Sollwert $\Delta U_{d,Soll}$ annähert, da die stromabhängige Kennlinie der Fehlspannung $u_F(i_d)$ im Bereich des Nennstroms der Endstufe näherungsweise waagrecht verläuft.

Dabei wird die Bestimmung des genannten Widerstands, der bei Anschließen einer Drehfeldmaschine an den Stromrichter als Statorwiderstand der Drehfeldmaschine angesehen werden kann, unabhängig von der Fehlspannung vorgenommen, ohne dass sich hierdurch die Genauigkeit bei der Bestimmung der Fehlspannung des Stromrichters signifikant verschlechtern würde.

Der Strombereich, in dem der für die Bestimmung des Widerstands verwendete Iststromsprung gemessen wird, der sich auf einen entsprechenden Sollspannungssprung einstellt, kann vorteilhafterweise 75% bis 125% oder 90% bis 105% des Nennstroms der Endstufe oder der Drehfeldmaschine betragen.

Insbesondere kann der genannte Hauptwiderstand gemäß der Beziehung

$$R_1 = \frac{\Delta U_{d,Soll}}{\Delta I_{d,Ist}}$$

bestimmt werden, wobei $R_1$ der Hauptwiderstand, $\Delta U_{d,Soll}$ ein vorbestimmter Sollspannungssprung und $\Delta I_{d,Ist}$ der bei diesem Sollspannungssprung gemessene Iststromsprung ist.

Die Fehlspannung kann vorteilhafterweise anhand der Beziehung

$$u_F = U_{d,Soll} - R_1\, I_{d,max}$$

bestimmt werden, wobei $u_F$ die Fehlspannung, $u_{d,Soll}$ den Endwert des Soll-Spannungssprungs, $R_1$ der Lastwiderstand und $I_{d,max}$ der Endwert des als Sprungantwort gemessenen Iststroms ist.

Erfindungsgemäß wird zur Charakterisierung des Fehlspannungsverhaltens des Stromrichters, insbesondere Frequenzumrichters, eine Fehlspannungskennlinie $u_F(i)$ bestimmt, die die Fehlspannung des Stromrichters abhängig vom Strom angibt.

Dabei wird eine solche Fehlspannungskennlinie aus einer Vielzahl von Messpunkten zu der genannten Fehlspannung ermittelt, zwischen denen interpoliert, insbesondere linear interpoliert werden kann. Die genannten Messpunkte zur Fehlspannung können in der vorgenannten Weise bestimmt werden, indem der Hauptwiderstand, insbesondere Statorwiderstand der Drehfeldmaschine, in einem ausreichend hohen Strombereich aus dem dort auftretenden Ist-Stromsprung zu einem vorbestimmten Soll-Spannungssprung berechnet und aus dem Soll-Spannungswert und dem genannten Korrekturglied bestimmt wird.

Eine solche Fehlspannungskennlinie $u_F(i)$ kann dann vorteilhafterweise beim Betreiben und/oder Steuern einer Drehfeldmaschine verwendet werden, um die Ansteuerungsgrößen für den Stromrichter entsprechend zu korrigieren, so dass die tatsächlich am Ausgang des Stromrichters anliegende Spannung der gewünschten Sollspannung möglichst nahe kommt. Insbesondere kann hierzu aus der Fehlspannungskennlinie stromabhängig ein Korrekturwert bestimmt werden, mit dem die Ansteuerung des Stromrichters korrigiert werden kann, um die Fehlspannung am Stromrichter zu kompensieren bzw. zumindest weitgehend zu reduzieren. Eine solchermaßen korrigierte Ansteuerung des Stromrichters kann in einem Steuerungsbaustein der Leistungselektronik bzw. in der Software eines Steuerungsbausteins der Ansteuereinrichtung implementiert sein.

Die Messwerte der für bestimmte Soll-Spannungssprünge auftretenden, gemessenen Sprungantworten in Form des Ist-Stroms können dabei an der zu betreibenden bzw. zu steuernden Drehfeldmaschine, die an den jeweiligen Stromrichter bzw. Frequenzumrichter angeschlossen ist, erfasst werden, wobei die Drehfeldmaschine hierzu vorteilhafterweise online bzw. im Betrieb befindlich sein kann. Die Drehfeldmaschine wird hierzu über den Stromrichter lediglich in der beschriebenen Weise intelligent angesteuert, wobei vorbestimmte Spannungswerte eingestellt und die sich einstellende Sprungantwort des Stroms erfasst werden, um in der genannten Weise fehlspannungsunabhängig den Statorwiderstand der Drehfeldmaschine zu bestimmten und die Fehlspannungskennlinie $u_F(i)$ zu bestimmen. Hierzu kann an der Drehfeldmaschine und/oder einer damit verbundenen Kompensationseinrichtung ein Sollspannungsbaustein zum Vorgeben von schritt- und/oder stufenweise ansteigenden Sollspannungswerten, eine Erfassungseinrichtung zum Erfassen des sich dabei als Sprungantwort einstellenden Ist-Stroms und eine Bestimmungseinrichtung zum Bestimmen des Statorwiderstands und ferner der Fehlspannung in der vorgenannten Weise vorgesehen sein.

Alternativ wäre es aber grundsätzlich auch möglich, die Fehlspannung des Stromrichters mit Hilfe einer Endstufe zu bestimmen, an die der Stromrichter angeschlossen wird, wobei vorteilhafterweise die genannte Endstufe eine ähnliche Charakteristik, insbesondere einen ähnlichen Nennstrom wie die mit dem Stromrichter zu betreibende Drehfeldmaschine aufweisen kann. Die mit Hilfe einer solchen Endstufe bestimmte Fehlspannungskennlinie $u_F(i)$ des Stromrichters kann dann in die Steuerung der Drehfeldmaschine implementiert werden, um die Fehlspannung des Stromrichters in der genannten Weise zu kompensieren.

Die Erfindung wird nachfolgend anhand eines Ausführungsbeispiels und zugehöriger Zeichnungen näher erläutert. In den Zeichnungen zeigen:

Fig. 1:   eine diagrammartige Darstellung eines sprunghaft ansteigenden Sollspannungsverlaufes $u_{d,Soll}$ über der Zeit und eine sich dabei einstellende Sprungantwort in Form eines Ist-Stroms $i_{d,Ist}$ über der Zeit zur Parameteridentifikation einer Drehfeldmaschine wie eines Asynchronmotors,

Fig. 2:   eine aus dem Sollspannungsverlauf und der erfassten Ist-Strom-Antwort gemäß Fig. 1 bestimmte Fehlspannungskennlinie $u_F(i_d)$ der stromabhängigen Fehlspannung eines Frequenzumrichters, an dem die genannte Drehfeldmaschine angeschlossen ist,

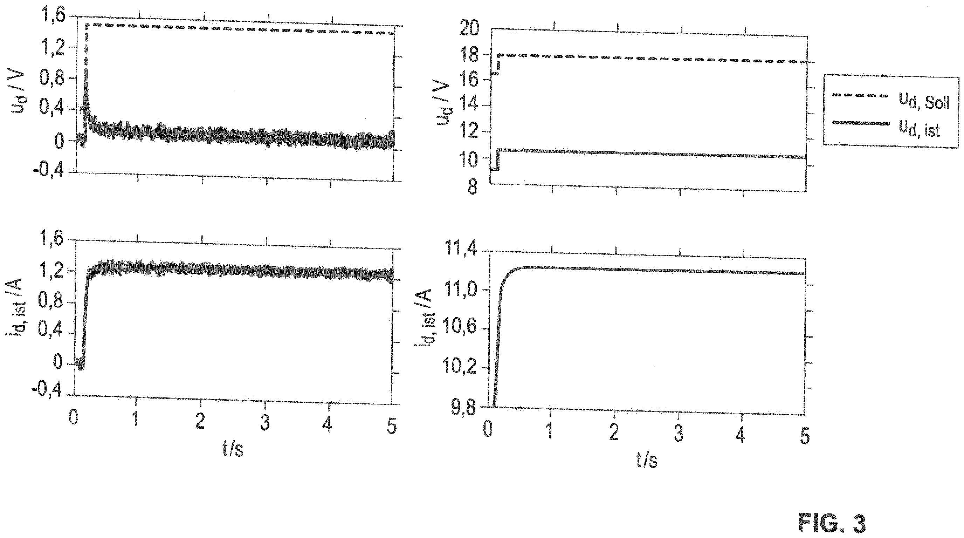

Fig. 3:   eine schematische Darstellung eines Spannungssprungs und der sich daraus ergebenden Ist-Strom-Antwort in einem niedrigen Strombereich sowie eines Soll-Spannungssprungs und der sich als Antwort einstellenden Ist-Stroms in einem hohen Strombereich nahe dem Nennstrom der Drehfeldmaschine, zur Verdeutlichung des Einflusses der Fehlspannungskompensation auf die Spannungssprünge, wobei in den beiden Soll-Spannungsdiagrammen neben dem Soll-Spannungsverlauf auch der tatsächliche Ist-Spannungsverlauf eingetragen ist, um die unterschiedlich starke Verformung in Abhängigkeit der Stromhöhe zu illustrieren, und

Fig. 4:   eine schematische Darstellung einer Asynchronmaschine, die an einen Frequenzumrichter angeschlossen ist.

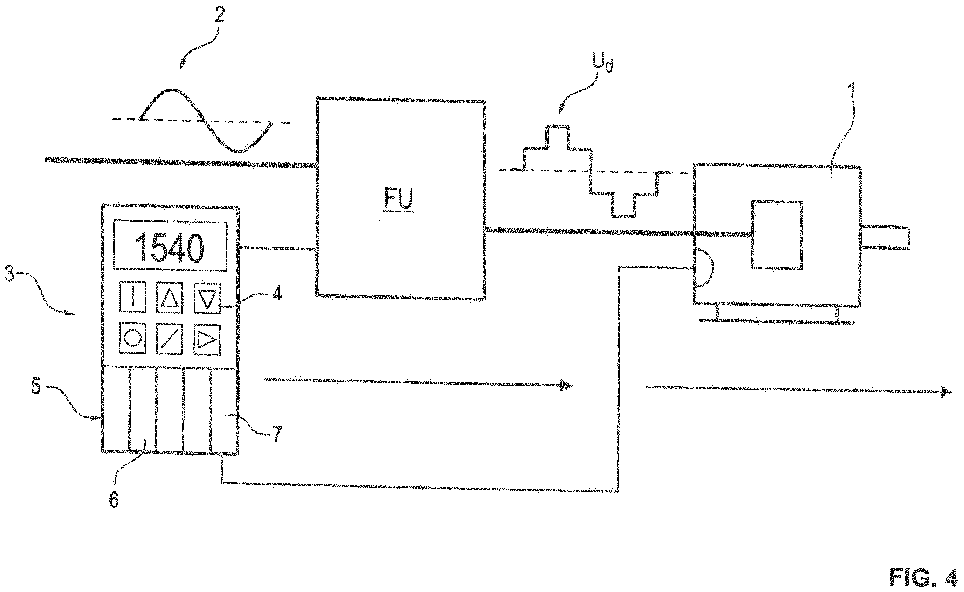

Wie Fig. 4 zeigt, kann eine Drehfeldmaschine 1 beispielsweise in Form eines Asynchronmotors an einen Frequenzumrichter FU angeschlossen sein, der beispielsweise eine eingangsseitig anliegende Sinusspannung 2 in eine treppenförmige Ausgangsspannung $u_d$ umrichtet, mit welcher der genannte Asynchronmotor betrieben wird. Es versteht sich jedoch, dass die eingangsseitige Spannung 2 ebenso wie die ausgangsseitig umgerichtete Spannung $u_d$ anders beschaffen sein können und der Frequenzumrichter FU andere Umrichteigenschaften implementieren kann.

Der Betrieb des Frequenzumrichters FU kann über eine Steuereinrichtung 3, die eine Eingabeeinrichtung 4 aufweisen kann, variabel gesteuert werden, um die Drehfeldmaschine 1 in der gewünschten Weise zu betreiben und zu steuern.

Um die am Frequenzumrichter FU auftretende Fehlspannung $u_F$ zu bestimmen und beim Betreiben der Drehfeldmaschine 1 kompensieren zu können, kann die genannte Steuereinrichtung 3 eine Bestimmungseinrichtung 5 aufweisen, die beispielsweise in Form eines Softwarebausteins in der Steuereinrichtung 3 implementiert sein kann, um die Drehfeldmaschine 1 bzw. den Frequenzumrichter FU in einem Bestimmungsmodus zum Bestimmen der Fehlspannung betreiben und bestimmte Spannungswerte am Frequenzumrichter einstellen zu können.

Insbesondere kann die genannte Bestimmungseinrichtung 5 einen Soll-Spannungsbaustein 6 umfassen, der an dem Frequenzumrichter FU ausgangsseitig eine stufenweise ansteigende Sollspannung $u_{d,Soll}$ anlegt, wie sie in Fig. 1 gezeigt ist. Beispielsweise kann in zeitlich vorgegebenen Schritten die Sollspannung $u_{d,Soll}$ um jeweils einen gleich bleibenden Sollspannungssprung angehoben werden, beispielsweise dergestalt, dass alle drei Sekunden die Soll-Spannung $u_{d,Soll}$ um 0,4 V erhöht wird, vgl. Fig. 1, wobei dies nur beispielhaft zu verstehen ist.

Die Bestimmungseinrichtung 5 kann weiterhin eine Strommesseinrichtung 7 umfassen, mittels derer die sich auf die Spannungssprünge einstellende Sprungantwort in Form des Ist-Stroms $i_{d,Ist}$ beispielsweise an der Drehfeldmaschine 1 gemessen werden kann. Wie Fig. 1 zeigt, kann mittels der Strommesseinrichtung 7 der sich über die Zeit ergebende Ist-Stromverlauf $i_{d,Ist}$ in Ampere bestimmt und die sich jeweils einstellenden Stromsprünge $\Delta I_{d,Ist}$ bestimmt werden können.

Der Soll-Spannungsbaustein 6 ist dabei vorteilhafterweise derart konfiguriert, dass in dem Parameter-Identifikationsmodus die Soll-Spannung so weit erhöht wird, bis sich als Antwort ein gemessener Strom $I_{d,max}$ im Bereich des Nennstroms der Drehfeldmaschine 1 ergibt. Beträgt beispielsweise der Nennstrom I N der Drehfeldmaschine 1 25 Ampere, kann die Spannung $u_{d,Soll}$ so lange erhöht werden, bis sich ein Strom im Bereich von etwa 25 A einstellt.

Die Anregung mit den genannten Spannungssprüngen kann dabei vorteilhafterweise in einem stationären Zustand erfolgen. Beispielsweise kann die Drehfeldmaschine 1 im Stillstand angeregt werden.

Die genannte Bestimmungseinrichtung 5 kann dabei die Fehlspannung $u_F$ anhand der Beziehung

$$u_F = U_{d,Soll} - R_1 I_{d,max}$$

bestimmen, wobei $u_F$ die Fehlspannung, $U_{d,Soll}$ jeweils dem Endwert des Soll-Spannungssprungs, $R_1$ der Statorwiderstand der Drehfeldmaschine 1 und $I_{d,max}$ der Endwert der Sprungantwort in Form des sich einstellenden Stroms ist.

Um den genannten Statorwiderstand $R_1$ der Drehfeldmaschine 1 zu bestimmen, verwendet die genannte Bestimmungseinrichtung 5 die Beziehung

$$R_1 = \frac{\Delta U_{d,Soll}}{\Delta I_{d,Ist}}$$

wobei $R_1$ der besagte Statorwiderstand, $\Delta U_{d,Soll}$ ein Sollspannungssprung und $\Delta I_{d,Ist}$ die sich dabei einstellende Sprungantwort in Form der sich einstellenden Stromänderung ist, wie dies beispielhaft in Fig. 1 dargestellt ist.

Dabei verwendet die Bestimmungseinrichtung 5 allerdings keinen Soll-Spannungssprung und die sich dabei einstellende Stromänderung in einem niedrigen Strombereich, sondern vielmehr einen Spannungssprung $\Delta U_{d,Soll}$ der Soll-Spannung und die sich dabei einstellende Sprungantwort in Form der Stromänderungen $\Delta I_{d,Ist}$ in einem ausreichend hohen Strombereich, der vorteilhafterweise nahe beim Nennstrom der Endstufe des Stromrichters und/oder der Drehfeldmaschine 1 liegt. Insbesondere kann der genannte Soll-Spannungssprung $\Delta U_{d,Soll}$ und die sich dabei einstellende Stromänderung $\Delta I_{d,Ist}$ in einem Strombereich von 75%-100% oder 90%-100% des Nennstroms $I_F$ der Endstufe und/oder des Nennstroms $I_N$ der Drehfeldmaschine 1 gewählt werden.

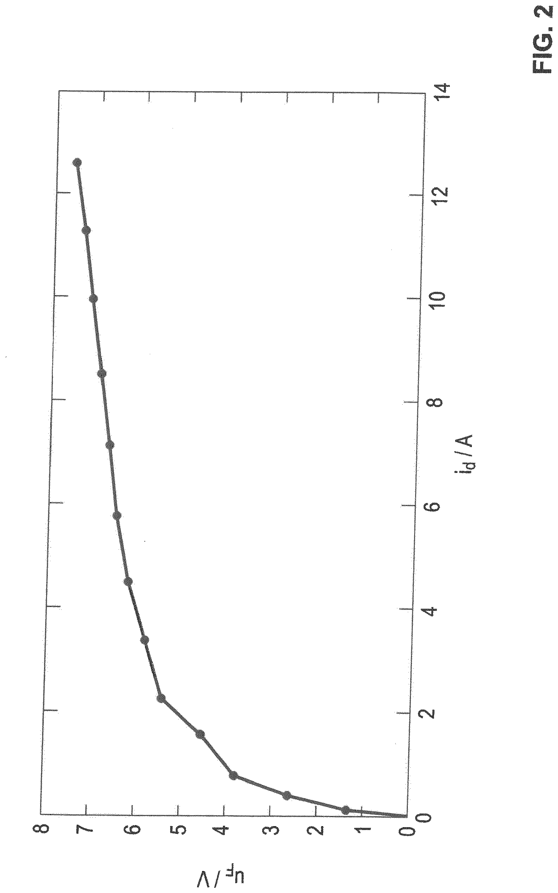

Erfolgt nämlich die genannte Messung mit ausreichend hohem Strom, kann der Statorwiderstand $R_1$ ohne Berücksichtigung der Fehlspannung näherungsweise exakt berechnet werden. Idealerweise kann diese Messung im Bereich des Nennstroms der Endstufe vorgenommen werden, da im Bereich des Nennstroms die Kennlinie $u_F(i_d)$ näherungsweise waagrecht verläuft, wodurch sich die Fehlspannung aufhebt bzw. ihr Einfluss vernachlässigbar wird. Die sich zum Nennstrom hin immer mehr abflachende Kennlinie $u_F(i_d)$ ist aus der Fig. 2 ersichtlich.

Die stromabhängige Verformung des Spannungssprungs ist insbesondere aus Fig. 3 ersichtlich. Betrachtet man beispielsweise bei dem niedrigen Strom $I_{d,max}$ = 125,9 mA den dazu vorgegebenen Soll-Spannungssprung von $\Delta U_{d,Soll}$ = 1,5 V, zeigt Fig. 3, dort linke Seite, dass der Spannungssprung nach erfolgter Fehlspannungskompensation relativ stark verformt wird, so dass der reale Spannungssprung $\Delta U_{d,Ist}$ nur etwa $\Delta U_{d,Ist}$ = 119,6 mV beträgt.

Betrachtet man indes einen solchen Soll-Spannungssprung von $\Delta U_{d,Soll}$ = 1,5 V (von beispielsweise 16,5 V auf 18 V) bei einem relativ hohen Strom von $I_{d,max}$ = 11,3 A, wird der tatsächliche Spannungssprung deutlich weniger verformt, vgl. Fig. 3, dort rechte Seite. Die reale Sprungshöhe $\Delta U_{d,Ist}$ beträgt dabei etwa 1,3 V.

Betrachtet man den Soll-Spannungssprung in einem noch näher am Nennstrom der Endstufe liegenden Strombereich, insbesondere im Bereich von näherungsweise $I_N$ = 25 A, nähert sich die tatsächliche, reale Sprungshöhe des Spannungssprungs $\Delta U_{d,Ist}$ noch genauer an den vorgegebenen Sollwert $\Delta U_{d,Soll}$ = 1,5 V an, da die Kennlinie der Fehlspannung $u_F(i_d)$ im Bereich des Nennstroms $I_N$ = 25 A näherungsweise waagerecht verläuft (in Fig. 2 nicht mehr gezeigt, da dort die Kennlinie $u_F(i_d)$ nur bis zu einem Strom von etwa 12,5 A gezeigt ist).

Wird der Statorwiderstand $R_1$ aus den bei dem genannten hohen Strom $I_{d,max}$ = 11,3 A gewonnenen Werten bestimmt, lässt sich der Statorwiderstand $R_1$ anhand der oben angegebenen Beziehung folgendermaßen berechnen:

$$R_1 = \frac{1,5 \text{ V}}{11,2732 \text{ A} - 9,8689 \text{ A}} = 1,07 \text{ } \Omega$$

Anhand des bestimmten Statorwiderstands $R_1$ kann dann unter Verwendung der genannten Beziehung

$$u_F = U_{d,Soll} - R_1 I_{d,max}$$

der in Fig. 2 gezeigte Kennlinienverlauf der stromabhängigen Fehlspannung $u_F(i_d)$ bestimmt werden, beispielsweise indem zwischen den dort gezeigten 13 Messpunkten linear interpoliert wird.

**Patentansprüche**

1. Verfahren zum Bestimmen einer Fehlspannung eines Stromrichters, an den eine Last angeschlossen ist, wobei eine ausgangsseitig anliegende Spannung am Stromrichter stufen- oder schrittweise erhöht und der sich dabei als Sprungantwort einstellende Strom gemessen wird, **dadurch gekennzeichnet, dass** eine Fehlspannungskennlinie ($u_F(i_d)$), die die Fehlspannung ($u_F$) des Stromrichters abhängig vom Strom angibt, aus einer Vielzahl von Messpunkten der Fehlspannung ($u_F$) ermittelt wird, wobei bei der genannten Bestimmung der Fehlspannungskennlinie ($u_F(i_d)$) die Last in einem stationären Zustand betrieben und die Soll-Spannung ($I_{d,Soll}$) stufen- oder schrittweise soweit erhöht wird, bis sich an der Last als Antwort ein gemessener Strom ($I_{d, max}$) im Bereich des Nennstroms der Last ergibt, wobei die Fehlspannung ($u_F$) jeweils aus dem als Sprungantwort gemessenen Strom ($I_{d,max}$) und einem Widerstand ($R_1$) der Last bestimmt wird, wobei der genannte Widerstand ($R_1$) unter Nicht-Berücksichtigung der tatsächlichen Fehlspannung des Stromrichters aus einem Soll-Spannungssprung ($\Delta U_{d,Soll}$) und einem gemessenen Ist-Stromsprung ($\Delta I_{d,Ist}$) in einem Strombereich von mindestens 33% oder mindestens 50% des Nennstroms ($I_F$) des Stromrichters bestimmt wird.

2. Verfahren nach Anspruch 1, wobei der Soll-Spannungssprung ($\Delta U_{d,Soll}$) zum Bestimmen des Widerstands ($R_1$) so gewählt wird, dass die sich einstellende Sprungantwort in Form des Endwerts des Strom ($I_{d,max}$) in einem Strombereich von 75% bis 125% oder 90% bis 105% des Nennstroms ($I_F$) einer Endstufe des Stromrichters gemessen wird.

3. Verfahren nach einem der vorhergehenden Ansprüche, wobei der Widerstand ($R_1$) gemäß der Beziehung

$$R_1 = \frac{\Delta U_{d,Soll}}{\Delta I_{d,Ist}}$$

bestimmt wird, wobei $R_1$ der Widerstand der Last, $\Delta U_{d,Soll}$ ein vorbestimmter Soll-Spannungssprung und $\Delta I_{d,Ist}$ der bei dem genannten Soll-Spannungssprung gemessene Ist-Stromsprung ist.

4. Verfahren nach einem der vorhergehenden Ansprüche, wobei die Fehlspannung ($u_F$) gemäß der Beziehung

$$u_F = U_{d,Soll} - R_1\, I_{d,max}$$

bestimmt wird, wobei $u_F$ die Fehlspannung, $u_{d,Soll}$ der Endwert des Soll-Spannungssprungs, $R_1$ der Widerstand der Last und $I_{d,max}$ der Endwert des als Sprungantwort gemessenen Stroms ist.

5. Verfahren nach dem vorhergehenden Anspruch, wobei zur Bestimmung der genannten Fehlspannungskennlinie ($u_F(i_d)$) zwischen den Messpunkten interpoliert, insbesondere linear interpoliert wird.

6. Verfahren nach einem der vorhergehenden Ansprüche, wobei auch der Widerstand ($R_1$) der Last und der hierzu verwendete Ist-Strom ($\Delta I_{d,Ist}$) im Betrieb der Last bestimmt werden.

7. Verfahren nach dem vorhergehenden Anspruch, wobei die Last bei der Bestimmung der Fehlspannung im Stillstand betrieben wird.

8. Verfahren nach einem der vorhergehenden Ansprüche, wobei als Last eine Drehfeldmaschine (1), insbesondere eine Asynchronmaschine, an den Stromrichter angeschlossen wird.

9. Verfahren nach einem der vorhergehenden Ansprüche, wobei als Stromrichter ein Frequenzumrichter (FU) verwendet wird.

10. Verfahren zum Betreiben und/oder Steuern einer Drehfeldmaschine (1), bei dem eine Fehlspannung eines Stromrichters, an dem die Drehfeldmaschine angeschlossen ist, bestimmt und kompensiert wird, **dadurch gekennzeichnet, dass** die Fehlspannung des Stromrichters mit Hilfe des Verfahrens gemäß einem der Ansprüche 1-9 im Betrieb der Drehfeldmaschine (1) bestimmt wird.

11. Verfahren nach dem vorhergehenden Anspruch, wobei anhand einer für den Stromrichter bestimmten Fehlspannungskennlinie ($u_F(i_d)$), die die Fehlspannung ($u_F$) des Stromrichters in Abhängigkeit des Stroms angibt, ein stromabhängiger Korrekturwert für die Ansteuerung des Stromrichters bestimmt wird, welcher Korrekturwert die Fehlspannung kompensiert.

12. Verfahren nach einem der vorhergehenden Ansprüche, wobei die Drehfeldmaschine (1) und eine Endstufe des Stromrichters aufeinander abgestimmt ausgewählt werden, so dass ein Nennstrom ($I_N$) der Drehfeldmaschine (1) zumindest näherungsweise dem Nennstrom ($I_F$) der Endstufe des Stromrichters entspricht.

13. Drehfeldmaschine (1), insbesondere Asynchronmaschine, mit einer Leistungselektronik umfassend einen Stromrichter, insbesondere Frequenzumrichter (FU), sowie einer Steuereinrichtung (3) zum Ansteuern des Stromrichters zum Steuern des Betriebs der Drehfeldmaschine (1), wobei die genannte Steuereinrichtung (3) eine Bestimmungseinrichtung (5) zum Bestimmen einer Fehlspannung ($u_F$) des Stromrichters aufweist, wobei die Bestimmungseinrichtung (5) einen Soll-Spannungsbaustein (6) zum Einstellen einer sprunghaft erhöhten Soll-Spannung ($u_{d,Soll}$) ausgangsseitig am Stromrichter sowie eine Stromerfassungseinrichtung (7) zum Erfassen des sich als Sprungantwort einstellenden Ist-Stroms aufweist, **dadurch gekennzeichnet, dass** die Bestimmungseinrichtung (5) dazu konfiguriert ist, eine Fehlspannungskennlinie ($u_F(i_d)$), die die Fehlspannung ($u_F$) des Stromrichters abhängig vom Strom angibt, aus einer Vielzahl von Messpunkten der Fehlspannung ($u_F$) zu ermitteln, wobei bei der genannten Bestimmung der Fehlspannungskennlinie die Last in einem stationären Zustand betrieben und die Soll-Spannung stufen- oder schrittweise soweit erhöht wird, bis sich an der Last als Antwort ein gemessener Strom ($I_{d,max}$) im Bereich des Nennstroms der Last ergibt, und dazu konfiguriert ist, die genannte Fehlspannung ($u_F$) im Betrieb der Drehfeldmaschine (1) jeweils aus dem als Sprungantwort gemessenen Ist-Strom ($i_{d,Ist}$) und einem Widerstand ($R_1$) der Drehfeldmaschine zu bestimmen und ferner dazu konfiguriert ist, den genannten Widerstand ($R_1$) unter Nicht-Berücksichtigung der tatsächlichen Fehlspannung (($u_F$) aus einem Soll-Spannungssprung ($\Delta U_{d,Soll}$) und einem dabei bestimmten Ist-Stromsprung ($\Delta I_{d,Ist}$) in einem Strombereich von mindestens 30% oder mindestens 50% des Nennstroms der Endstufe zu bestimmen.

14. Drehfeldmaschine nach dem vorhergehenden Anspruch, wobei die Bestimmungseinrichtung (5) dazu konfiguriert ist,

- zur Bestimmung des Widerstands ($R_1$) einen Soll-Spannungssprung ($\Delta U_{d,Soll}$) und einen dabei bestimmten Ist-Stromsprung ($\Delta I_{d,Ist}$) in einem Strombereich von 75% bis 125% oder 90% bis 105% des Nennstroms ($I_F$) einer Endstufe des Stromrichters zu verwenden, und/oder

- den Widerstand ($R_1$) gemäß der Beziehung

$$R_1 = \frac{\Delta U_{d,Soll}}{\Delta I_{d,Ist}}$$

mit $R_1$ als Widerstand, $\Delta U_{d,Soll}$ als vorbestimmter Soll-Spannungssprung und $\Delta I_{d,Ist}$ als der dabei bestimmte Ist-Stromsprung zu bestimmen, und/oder
- die Fehlspannung ($u_F$) gemäß der Beziehung $u_F = U_{d,Soll} - R_1 I_{d,max}$ mit $u_F$ als Fehlspannung, $U_{d,Soll}$ als Endwert des Soll-Spannungssprung, $R_1$ als Widerstand und $I_{d,max}$ als Endwert der bei der sprunghaft erhöhten Soll-Spannung bestimmten Strom zu bestimmen.

## Claims

1. Method of determining an error voltage of a current converter to which a load is connected, wherein a voltage applied at the output side to the current converter is increased stagewise or stepwise and the current adopted as the step response in this process is measured, **characterized in that** a characteristic curve ($u_F$(id)) of the error voltage, which determines the error voltage ($u_F$) of the current converter dependent upon the current, is determined from a plurality of measurement points of the error voltage ($u_F$), wherein the load is operated in a stationary state in the determination of the characteristic curve ($u_F$(id)) of the error voltage and the desired voltage ($I_{d, des}$) are increased in a stepped manner until, at the load as a response, a measured current ($I_{d, max}$) in the region of the nominal current of the load results, wherein the error voltage ($u_F$) is determined from the current ($I_{d,max}$) measured as the step response and from a resistance ($R_1$) of the load, with said resistance ($R_1$) being determined from a desired voltage jump $\Delta U_{d,des}$ and from a measured actual current jump ($\Delta I_{d,act}$) in a current range of at least 33% or of at least 50% of the nominal current ($I_F$) of the current converter.

2. Method in accordance with claim 1, wherein the desired voltage jump ($\Delta U_{d,des}$) for determining the resistance ($R_1$) is selected such that the step response adapted in the form of the final value of the current ($I_{d,max}$) is measured in a current range of 75% to 125% or 90% to 105% of the nominal current ($I_F$) of an end stage of the current converter.

3. Method in accordance with one of the preceding claims, wherein the resistance ($R_1$) is determined in accordance with the relationship

$$R_1 = \frac{\Delta U_{d,des}}{\Delta I_{d,act}}$$

where $R_1$ is the resistance of the load, $\Delta U_{d,des}$ is a predetermined desired voltage jump, and $\Delta I_{d,act}$ is the actual current jump measured at said desired voltage jump.

4. Method in accordance with one of the preceding claims, wherein the error voltage ($U_F$) is determined in accordance with the relationship

$$u_F = U_{d,des} - R_1 I_{d,max}$$

where $u_F$ is the error voltage, $U_{d,des}$ is the end value of the desired voltage jump, $R_1$ is the resistance of the load, and $I_{d,max}$ is the end value of the current measured as the step response.

5. Method in accordance with the preceding claim, wherein said error voltage characteristic curve ($u_F$(id)) is determined by means of an interpolation, in particular a linear interpolation.

6. Method in accordance with one of the preceding claims, wherein the resistance ($R_1$) and the actual current ($\Delta I_{d,act}$) used for this purpose are determined in operation of the load as well.

**7.** Method in accordance with the preceding claim, wherein the load is operated at a standstill in the determination of the error voltage.

**8.** Method in accordance with one of the preceding claims, wherein a three-phase machine (1), in particular an asynchronous machine, is connected to the current converter as the load.

**9.** Method in accordance with one of the preceding claims, wherein a frequency converter (FU) is used as the current converter.

**10.** Method of operating and/or controlling a three-phase machine (1), in which an error voltage of a current converter to which the three-phase machine is connected is determined and optionally compensated, **characterized in that** the error voltage of the current converter is determined with the aid of the method in accordance with one of the claims 1 - 11 in operation of the three-phase machine (1).

**11.** Method in accordance with the preceding claim, wherein a current dependent correction value for the control of the current converter is determined, which correction value compensates the error voltage, with reference to an error voltage characteristic curve ($u_F(I_d)$) that is determined for the current converter and that indicates the error voltage ($u_F$) of the current converter in dependence on the current.

**12.** Method in accordance with one of the preceding claims, wherein the three-phase machine (1) and an end stage of the current converter are selected matched to one another such that a nominal current ($I_N$) of the three-phase machine (1) at least approximately corresponds to the nominal current ($I_F$) of the end stage of the current converter.

**13.** Three-phase machine (1), in particular an asynchronous machine, having power electronics comprising a current converter, in particular a frequency converter (FU), and a control device (3) to control the current converter for controlling the operation of the three-phase machine (1), wherein said control device (3) has a determination device (5) for determining an error voltage ($u_F$) of the current converter, wherein the determination device (5) has a desired voltage module (6) for setting a desired voltage ($u_{d,des}$) increased jumpwise at the output side at the current converter and a current detection device (7) for detecting the actual current adopted as the step response, **characterized in that** the determination device (5) is configured to determine a characteristic curve ($u_F(i_d)$) of the error voltage, which determines the error voltage ($u_F$) of the current converter dependent upon the current, from a plurality of measurement points of the error voltage ($u_F$), wherein the load is operated in a stationary state in the determination of the characteristic curve ($u_F(id)$) of the error voltage and the desired voltage ($I_{d, des}$) are increased in a stepped manner until, at the load as a response, a measured current ($I_{d, max}$) in the region of the nominal current of the load results, and is configured to determine the error voltage ($u_F$) from the current ($I_{d,max}$) measured as the step response and from a resistance ($R_1$) of the three-phase machine in operation of the three-phase machine (1), and is further configured to determine the resistance ($R_1$) from a desired voltage jump $\Delta U_{d,des}$ and from a measured actual current jump ($\Delta I_{d,act}$) in a current range of at least 33% or of at least 50% of the nominal current of the end stage.

**14.** Three-phase machine in accordance with the preceding claim, wherein the determination device (5) is configured

- to use a desired voltage jump ($\Delta U_{d,des}$) and an actual current jump ($\Delta I_{d,act}$) determined in this process in a current range of 75% to 125% or 90% to 105% of the nominal current ($I_F$) of an end stage of the current converter to determine the resistance ($R_1$); and/or
- to determine the resistance ($R_1$) in accordance with the relationship

$$R_1 = \frac{\Delta U_{d,des}}{\Delta I_{d,act}}$$

wherein $R_1$ is the resistance, $\Delta U_{d,des}$ is the predetermined desired voltage jump, and $\Delta I_{d,act}$ is the actual current jump determined in this process; and/or
- to determine the error voltage ($u_F$) in accordance with the relationship $u_F = U_{d,des} - R_1 I_{d,max}$, where $u_F$ is the error voltage, $U_{d,des}$ is the end value of the desired voltage jump, $R_1$ is the resistance, and $I_{d,max}$ is the end value of the current determined in the desired voltage increased jumpwise.

**Revendications**

1. Procédé permettant de déterminer un défaut de tension d'un convertisseur de courant auquel est connectée une charge, dans lequel une tension appliquée côté sortie du convertisseur de courant est augmentée graduellement ou progressivement et le courant se réglant alors comme réponse indicielle étant mesuré, **caractérisé en ce qu'**une caractéristique de défaut de tension ($u_F(i_d)$), qui indique le défaut de tension ($u_F$) du convertisseur de courant en fonction du courant, est déterminée à partir d'une pluralité de points de mesure du défaut de tension ($u_F$), la charge étant exploitée dans un état stationnaire lors de ladite détermination de la caractéristique de défaut de tension ($u_F(i_d)$) et la tension théorique ($I_{d,Soll}$) étant augmentée graduellement ou progressivement jusqu'à ce qu'un courant ($I_{d,max}$) mesuré dans la plage du courant nominal soit obtenu en réponse sur la charge, le défaut de tension ($u_F$) étant déterminé respectivement à partir du courant ($I_{d,max}$) mesuré comme réponse indicielle et d'une résistance ($R_1$) de la charge, ladite résistance ($R_1$) étant déterminée, sans prendre en compte le défaut de tension effectif du convertisseur de courant, à partir d'un saut de tension théorique ($\Delta U_{d,Soll}$) et d'un saut de courant effectif ($\Delta I_{d,Ist}$) mesuré, dans une plage de courant d'au moins 33 % ou au moins 50 % du courant nominal ($I_F$) du convertisseur de courant.

2. Procédé selon la revendication 1, dans lequel le saut de tension théorique ($\Delta U_{d,Soll}$) pour déterminer la résistance ($R_1$) est sélectionné de telle manière que la réponse indicielle se réglant est mesurée sous la forme de la valeur finale du courant ($I_{d,max}$) dans une plage de courant de 75 % à 125 % ou de 90 % à 105 % du courant nominal ($I_F$) d'un étage final du convertisseur de courant.

3. Procédé selon l'une des revendications précédentes, dans lequel la résistance ($R_1$) est déterminée selon la relation

$$R_1 = \frac{\Delta U_{d,Soll}}{\Delta I_{d,Ist}}$$

où $R_1$ est la résistance de la charge, $\Delta U_{d,Soll}$ est un saut de tension théorique prédéfini et $\Delta I_{d,Ist}$ est le saut de courant effectif mesuré pour ledit saut de tension théorique.

4. Procédé selon l'une des revendications précédentes, dans lequel le défaut de tension ($u_F$) est déterminé selon la relation

$$u_F = U_{d,Soll} - R_1 I_{d,max}$$

où $u_F$ est le défaut de tension, $U_{d,Soll}$ est la valeur finale du saut de tension théorique, $R_1$ est la résistance de la charge et $I_{d,max}$ est la valeur finale du courant mesuré comme réponse indicielle.

5. Procédé selon la revendication précédente, dans lequel, pour déterminer ladite caractéristique de défaut de tension ($u_F(i_d)$), une interpolation, en particulier une interpolation linéaire, entre les points de mesure est effectuée.

6. Procédé selon l'une des revendications précédentes, dans lequel la résistance ($R_1$) de la charge et le courant effectif ($\Delta I_{d,Ist}$) utilisé pour celle-ci sont également déterminés pendant le fonctionnement de la charge.

7. Procédé selon la revendication précédente, dans lequel la charge est exploitée à l'arrêt lors de la détermination du défaut de tension.

8. Procédé selon l'une des revendications précédentes, dans lequel une machine à induction (1), en particulier une machine asynchrone, est raccordée au convertisseur de courant en guise de charge.

9. Procédé selon l'une des revendications précédentes, dans lequel un convertisseur de fréquence (FU) est utilisé comme convertisseur de courant.

10. Procédé de fonctionnement et/ou de commande d'une machine à induction (1), dans lequel un défaut de tension d'un convertisseur de courant auquel la machine à induction est raccordée, est déterminé et compensé, **caractérisé en ce que** le défaut de tension du convertisseur de courant est déterminé à l'aide du procédé selon l'une des revendications 1 à 9 pendant le fonctionnement de la machine à induction (1).

**11.** Procédé selon la revendication précédente, dans lequel une valeur de correction dépendante du courant est déterminée pour la commande du convertisseur de courant à l'aide d'une caractéristique de défaut de tension ($u_F(i_d)$) déterminée pour le convertisseur de courant, qui indique le défaut de tension ($u_F$) du convertisseur de courant en fonction du courant, ladite valeur de correction compensant le défaut de tension.

**12.** Procédé selon l'une des revendications précédentes, dans lequel la machine à induction (1) et un étage final du convertisseur de courant sont sélectionnés de manière coordonnée l'un à l'autre de telle manière qu'un courant nominal ($I_N$) de la machine à induction (1) correspond au moins approximativement au courant nominal ($I_F$) de l'étage final du convertisseur de courant.

**13.** Machine à induction (1), en particulier machine asynchrone, pourvue d'une électronique de puissance comprenant un convertisseur de courant, en particulier un convertisseur de fréquence (FU), ainsi que d'un dispositif de commande (3) servant à la commande du convertisseur de courant afin de commander le fonctionnement de la machine à induction (1), dans laquelle ledit dispositif de commande (3) présente un dispositif de détermination (5) pour déterminer un défaut de tension ($u_F$) du convertisseur de courant, le dispositif de détermination (5) présentant un module de tension théorique (6) pour régler une tension théorique ($u_{d,Soll}$) augmentée de manière discrète côté sortie sur le convertisseur de courant ainsi qu'un dispositif de détection de courant (7) pour détecter le courant effectif se réglant comme réponse indicielle, **caractérisée en ce que** le dispositif de détermination (5) est configuré pour déterminer une caractéristique de défaut de tension ($u_F(i_d)$), qui indique le défaut de tension ($u_F$) du convertisseur de courant en fonction du courant, à partir d'une pluralité de points de mesure du défaut de tension ($u_F$), la charge étant exploitée dans un état stationnaire lors de ladite détermination de la caractéristique de défaut de tension et la tension de consigne étant augmentée graduellement ou progressivement jusqu'à ce qu'un courant ($I_{d,max}$) mesuré dans la plage du courant nominal soit obtenu en réponse sur la charge, et configuré pour déterminer ledit défaut de tension ($u_F$) pendant le fonctionnement de la machine à induction (1), respectivement à partir du courant effectif ($i_{d,Ist}$) mesuré comme réponse indicielle et d'une résistance ($R_1$) de la machine à induction et est en outre configuré pour déterminer ladite résistance ($R_1$), sans prendre en compte le défaut de tension ($u_F$) réel, à partir d'un saut de tension théorique ($\Delta U_{d,Soll}$) et d'un saut de courant effectif ($\Delta I_{d,Ist}$) déterminé alors dans une plage de courant d'au moins 30 % ou au moins 50 % du courant nominal de l'étage final.

**14.** Machine à induction selon la revendication précédente, dans laquelle le dispositif de détermination (5) est configuré pour

- pour déterminer la résistance ($R_1$), utiliser un saut de tension théorique ($\Delta U_{d,Soll}$) et un saut de courant effectif ($\Delta I_{d,Ist}$) déterminé alors dans une plage de courant de 75 % à 125 % ou de 90 % à 105 % du courant nominal ($I_F$) d'un étage final du convertisseur de courant, et/ou
- déterminer la résistance ($R_1$) selon la relation

$$R_1 = \frac{\Delta U_{d,Soll}}{\Delta I_{d,Ist}}$$

avec $R_1$ comme résistance, $\Delta U_{d,Soll}$ comme saut de tension théorique prédéfini et $\Delta I_{d,Ist}$ comme saut de courant effectif déterminé alors, et/ou
- déterminer le défaut de tension ($u_F$) selon la relation $u_F = U_{d,Soll} - R_1 I_{d,max}$ avec $u_F$ comme défaut de tension, $U_{d,Soll}$ comme valeur finale du saut de tension théorique, $R_1$ comme résistance et $I_{d,max}$ comme valeur finale du courant déterminé pour la tension de consigne augmentée de manière discrète.

**FIG. 1**

FIG. 2

FIG. 3

EP 3 685 505 B1

FIG. 4

**IN DER BESCHREIBUNG AUFGEFÜHRTE DOKUMENTE**

**In der Beschreibung aufgeführte Patentdokumente**

- US 8084986 B2
- US 20110156632 A1
- GB 2417623 A


**In der Beschreibung aufgeführte Nicht-Patentliteratur**

- Vector controlled induction motor drive with a self-commissioning scheme. **KHAMBADKONE A et al.** proceedings of the annual conference of the industrial electronic society. IEEE, 27. November 1990, 927-932